# EUROPEAN PATENT SPECIFICATION

(11) **EP 0 368 924 B1**
(45) Date of publication and mention of the grant of the patent: **07.09.1994**
(21) Application number: 88907166.8
(22) Date of filing: 29.07.1988
(51) Int. Cl.: C25B 11/20

(54) **HIGH PERFORMANCE BIPOLAR MEMBRANES**
BIPOLARE HOCHLEISTUNGSMEMBRANEN
MEMBRANES BIPOLAIRES A HAUTE PERFORMANCE

(30) Priority: 30.07.1987 AU 3430/87; 17.05.1988 AU 8266/88
(43) Date of publication of application: 23.05.1990
(73) Proprietor: UNISEARCH LIMITED, Kensington New South Wales, 2033 (AU)
(72) Inventor: SIMONS, Raymond, Gary, Rose Bay, NSW 2029 (AU)
(74) Representative: Iannone, Carlo Luigi
(86) International application number: AU8800279
(87) International publication number: WO8901059

(56) References cited:
- EP-A- 0 143 582
- US-A- 4 140 815
- US-A- 4 670 125

## Description

### FIELD OF INVENTION

This invention relates to low electrical resistance bipolar membranes comprising separate anion and cation exchange films, a process for their production and to the use of such membranes for producing acid and alkali.

### BACKGROUND ART

Acids and bases are important intermediates for a wide variety of products made by the chemical industry. After processing and use these find their way back to nature as salts. A logical route for completing the cycle would be to regenerate the acids and bases directly from these salts. Electrolysis of brine to generate chlorine and caustic soda, in a certain sense, is such a process. Another process is electrodialysis, using bipolar membranes to directly generate acids and bases from their salts. The process is electrically driven and the splitting of the salt to generate the acid and base occurs in an aqueous medium. The process is conceptually a simple one and can be represented by the equation: 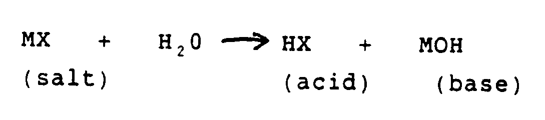
To effect and maintain separation of the various species, ion exchange membranes are used. The most crucial of these is the bipolar membrane, so called because it is composed of two distinct parts which are selective to ions of opposite charges. Under the influence of an applied direct current, such a sandwich membrane is capable of forcibly dissociating water to form equivalent amounts of hydrogen and hydroxyl ions. Used in conjunction with other cation- and anion- selective (i.e., monopolar), membranes, the assembly constitutes a potentially economical water splitting apparatus that generates acid and base.

The standard free energy for a process that converts water to one molar hydrogen and hydroxyl ions at 25°C is 19,100 cal/mole. For a reversible process, i.e., a process approaching zero current density, this translates to an energy requirement of 0.022 kWh/mole at 25°C. For production of caustic soda this is equivalent to an energy requirement of 500 kWh/ton. An efficient water splitting system is therefore capable of generating acid and base solutions at a fraction of the costs encountered commercially (2800-3500 kWh/ton).

Bipolar membranes can be prepared by many different methods. In U.S. Patents 4,024,043 and 4,057,481 (both Dege et al) single film bipolar membranes are prepared from pre-swollen films containing a relatively high amount of an insoluble cross-linked aromatic polymer on which highly dissociable cationic exchange groups are chemically bonded to the aromatic nuclei to a desired depth of the film from one side only; subsequently, highly dissociable anionic exchange groups are chemically bonded to the unreacted aromatic nuclei on the other side of the film.

In Japanese Patent Publication Nos. 78-158638 and 79-7196 (both Tokuyama Soda Co. Ltd.), bipolar membranes are prepared by partially covering a membrane with a cover film, sulfonating the surface of the membrane not in contact with the cover film to introduce cation exchange groups, exfoliating the cover film, and introducing anion exchange groups on the exfoliated surfaces.

Bipolar membranes have also been prepared by bonding together separate anion and cation exchange films or membranes. The two monopolar membranes of opposite selectivity can be fused together with the application of heat and pressure. See, for example, U.S. Patent 3,372,101 by Kollsman wherein separate cation and anion membranes are bonded together in a hydraulic press at 150°C at a pressure of 400 lb/sq. inch to form a two ply membrane structure.

However, bipolar membranes formed in this way suffer the disadvantage of high electrical resistance produced by the fusion. Furthermore these membranes are prone to bubble or blister and they are operable for only short time periods at relatively low current densities. These disadvantages make the bipolar membranes formed in this way unattractive for commercial electrodialysis operations.

In other relevant prior art, i.e. GB-A-2 122 543, a summary of which has been published by the present inventor in Electrochimica Acta, 31(9) 1175-1176 (1986), there is disclosed a method for the preparation of bipolar membranes whereby inorganic electrolyte solutions are brushed at room temperature onto the faces of suitable anionic and cationic membranes, prior to the faces being pressed together. A variety of electrolite solutions were found to be effective in facilitating the preparation of potassium hydroxide and hydrochloric acid from a potassium chloride solution. Unfortunately, it was found that membranes only remained effective for a few hours when 1 molar acid and base solutions were separated by a membrane and for a few weeks only when a membrane separated potassium chloride solutions.

### DISCLOSURE OF INVENTION

It is therefore an object of the present invention to provide bipolar membranes made from separate anion and cation exchange membranes that are substantially free of the aforementioned disadvantages of the prior art.

It is a further object of this invention to provide a method for preparing low resistance bipolar membranes with a high efficiency for water splitting, by joining together separate anion and cation exchange membranes.

It is another object of this invention to provide a process whereby acid and alkali may be produced by the use of low resistance bipolar membranes.

Accordingly, the present invention in a first aspect consists in a bipolar membrane comprising conjoined anion and cation exchange membranes, wherein said membranes have been treated with:
(a) treatment with an aqueous salt solution in a concentration of at least 5% w/v, the salt solution providing at least one divalent or higher oxidation state cation, prior to being conjoined, and
(b) treatment of at least one face of one of the anion and cation exchange membranes with an aqueous alkaline solution in a concentration of at least 0.2N,
characterised in that said aqueous alkaline solution or the solution resulting from the combination of said aqueous salt solution with said aqueous alkaline solution is at a temperature of at least 60 °C.

In a second aspect, the present invention consists in a method for the preparation of a bipolar membrane from modified anion and cation exchange membranes by either
(a) treating an anion exchange membrane and a cation exchange membrane with an aqueous solution of a salt in a concentration of at least 5% w/v, said salt yielding in the solution at least one divalent or higher oxidation state cation;
(b) conjoining the treated anion and cation exchange membranes ; and
(c) treating at least one face of the conjoined membranes with an aqueous alkaline solution in a concentration of at least 0.2N, to give said bipolar membrane, or
(d) treating an onion exchange membrane and a cation exchange membrane with an aqueous alkaline solution of a salt, wherein said aqueous alkaline solution is in a concentration of at least 0.2N and said salt is in a concentration of at least 5% w/v, said salt yielding in the solution at least one divalent or higher oxidation state cation, and then conjoining the modified membranes to give said bipolar membrane,
characterised in that said aqueous alkaline solution or said aqueous alkaline solution of a salt is at a temperature of at least 60 °C.

In a third aspect, the present invention consists in a method for the production of acid and alkali, comprising electrodialysing an aqueous salt solution using a bipolar membrane of the first aspect of the invention.

The present inventor believes that this treatment may either alter or modify the surface properties or structure of the membrane and/or by the introduction of certain species into occlusions in the membrane.

It is preferred that the membranes are treated, prior to conjoining, by immersion in an aqueous solution of at least one divalent or higher oxidation state cation.

In one embodiment, the membranes are treated with the aqueous alkaline solution prior to conjoining. Conveniently, this solution may be combined with the aqueous solution of the at least one divalent or higher oxidation state cation.

In this embodiment, preferably each membrane is boiled in the cation containing solution of high pH. Moderate alkali concentrations, of about 1 molar, have been found to be effective, but lower or higher concentrations may also be utilised, typically in the size of from 0.2 to 2.0 molar.

Suitable metal cations include, but are by no means limited to, for example, Cr⁶⁺, Ru³⁺, Ce³⁺, Ni²⁺, Zr⁴⁺, In³⁺ and Sn²⁺.

Suitable cation containing salts include chromic nitrate, ruthenium trichloride, indium sulphate, cerous sulphate, thorium nitrate and zirconium chloride.

It will be appreciated that the above list of cations is not exhaustive. Further, while single salts may be used, mixtures of salts, and/or different concentrations of such salt(s) may be used.

The anion and cation exchange membranes treated as described herein, are pressed together either at room temperature or else under heat with treated surfaces located at the interface. This heating may be carried out at a temperature in the range from ambient up to a temperature just below the onset of deformation or degradation of the anionic or cationic exchange membranes employed.

Although the inventive membranes of this embodiment have been found to possess a number of advantages over prior art membranes, the preferred method of forming the membranes has two aspects which present some difficulty.

Firstly, a typical alkaline solution containing the selected cation species may splutter on heating and is strongly corrosive. The spluttering is exacerbated by the presence of the membrane and therefore limits the amount of membrane which can be treated in a given volume of solution.

Secondly in the hot alkaline solution, the membranes tend to be carried to the surface of the solution by convection. Thus, there is uncertainty as to whether the entire film surface has been treated. This difficulty would be expected to be more severe with increasing membrane size.

Surprisingly, in order to avoid the two aforementioned aspects of the method of that embodiment, the present inventor has found that alternatively, in a second embodiment, the membranes are treated with an aqueous solution of the selected cation, conjoined and then treated with an aqueous alkaline solution.

The present inventor has found that the membranes of this embodiment may be stored in a sealed container following treatment with the inventive aqueous cation solution. The membranes may then be removed from the container and conjoined to form a bipolar membrane prior to treatment with the aqueous alkaline solution.

The treatment of the cation and anion exchange membranes with the aqueous cation solution is preferably carried out by immersion of the membranes in the solution for an appropriate time. The solution need only be at room temperature, whilst the treatment time may vary from less than thirty minutes to overnight.

Suitable metal cations include, without limitation, Cr³⁺, Ru³⁺, Ce³⁺, Ni²⁺, Zr⁴⁺, In³⁺, Sn²⁺ and Fe²⁺. These may be present in the form of salts such as chromic nitrate, chromic chloride, ruthenium trichloride, ferrous chloride, indium sulphate, cerous sulphate, thorium nitrate and zirconium chloride.

A salt concentration of the order of about 5% to 15% has been found to be effective.

It will be appreciated that whilst single salts may be used, mixtures of salts, and/or different concentrations of such salt(s) may be used.

Following treatment with the aqueous cation solution, the membranes are preferably washed with water prior to being conjoined by pressing together either at room temperature or else they may be conjoined under heat at a temperature below the onset of deformation or degradation of the membrane.

Alternatively, after washing, the treated membranes may be stored wet in a sealed container for a period prior to them being joined.

Following conjoining, the membrane is treated with an aqueous alkaline solution, preferably by fitting the membrane into a multi-chamber electrodialysis cell and placing into at least one of the chambers in contact with the membrane, an amount of alkaline solution sufficient to treat the one of the faces of the membrane. This may take place at the point of preparation of the membrane or at the site of use.

Generally, the alkaline solution will be in concentration of about 0.2 - 2.0 molar at a temperature of about 75°C for a treatment time of about 15 - 30 minutes. However, the concentration, temperature of the solution and the treatment time may be varied appropriately.

Following the alkaline treatment, the bipolar membrane is ready for use. If the alkaline treatment has taken place in a cell as described, the alkaline solution may be conveniently replaced by the solution or solutions to be subjected to electrodialysis.

From the foregoing, it will be evident that by carrying out the inventive treatment in two steps, with the alkaline treatment preferably being carried out in an electrodialysis cell, the difficulties of the inventive process of the first embodiment are avoided.

The resulting bipolar membrane consists of three principle regions:
1. The anion exchange membrane: The prime function of the anion exchange membrane is to pass OH⁻ ions derived from water splitting at the interface and to exclude cations from the external solution.
2. The cation exchange membrane: The prime function of the cation exchange membrane is to pass H⁺ ions derived from water splitting at the interface and to exclude anions from the external solution.
3. An interfacial section comprising the surface layers of both membranes and the intervening region where they are contiguous: It is in this region that water splitting occurs.

The electrical resistance of the resulting bipolar membrane is generally much smaller than that of a membrane when the component membranes or at least the interface is untreated. A potential difference across the membrane which is 1.0V or less can be sufficient for a current density of 100mA cm⁻² when it separates 1N KC1 solutions. The corresponding voltage for a membrane if the component films are untreated is likely to exceed 3V. In addition the current efficiency for acid base production of treated membranes can be higher than 90%.

A wide variety of anion and cation exchange membranes containing strong acid and strong base groups may be used in the invention but preferably the membranes contain sulphonic acid and quaternary ammonium groups.

The treatment of the membranes according to the invention not only provides a high degree of bonding and adhesion between the anion and cation exchange membranes but, more importantly, provides a much lower electrical resistance for the resulting bipolar membrane than if the membrane or the interface of the component membranes is not treated or was bonded simply by the prior art application of heat and pressure.

From the foregoing, it is evident that there is a fundamental difference between the present invention and the prior art, including the inventor's own published paper and that is the treatment of the membranes in alkaline solution which includes at least one selected cation. It should also be noted that whereas in the inventor's previous disclosure, sodium metasilicate solutions are used, which are inherently alkaline, nevertheless there is no disclosure of the boiling of membranes in alkaline solutions containing at least one selected cation. Moreover, it has been found that boiling in sodium metasilicate solutions containing cations of the invention is not effective in making stable low resistance bipolar membranes which operate satisfactorily when separating one molar acid and base solutions.

### BRIEF DESCRIPTION OF THE DRAWINGS

Fig. 1 is a schematic representation of a bipolar membrane according to the present invention;
Fig. 2 is a schematic representation of a bipolar membrane electrodialysis cell for generating an acid and a base from a salt solution; and
Fig. 3 is a schematic representation of the electrodialysis cell used for determining the current efficiency of a bipolar membrane.

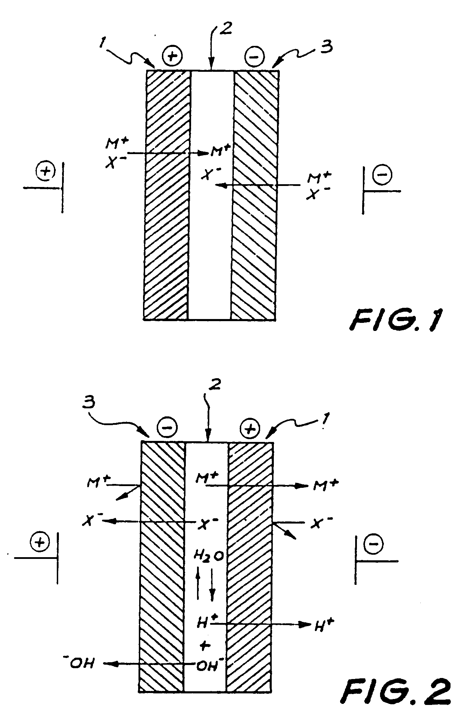

As shown schematically in Fig. 1, a bipolar membrane according to the invention consists of three regions, a cation-selective region 1, an anion-selective region 3, and the interface between these two regions 2. These membranes behave anisotropically under the influence of an electric field as is illustrated by the transport processes shown in Figs. 1 and 2. Fig. 1 shows that when a direct current is passed across the bipolar membrane with its cation side toward the anode and salt solution on either side, cations and anions are transported to the interface through the permselective membranes, but the passage of ions out of the interface region is limited since they would have to pass through membranes of the wrong selectivity. The salt consequently builds up at the interface and results in a low resistance in this region. When the orientation of the membrane is reversed as shown in Fig. 2 and a current is passed, salt from the interface is transported to the external solutions leaving only H⁺ and OH⁻ ions from the dissociation of water to carry the current. In this mode the resistance of the interface can become high since water has a low conductivity.

Fig. 2 illustrates the water splitting capacity of the bipolar membrane. If the interface is made very thin, then even though only H⁺ and OH⁻ ions may be present the resistance of the layer can be small and the membrane may be used to generate acid and base.

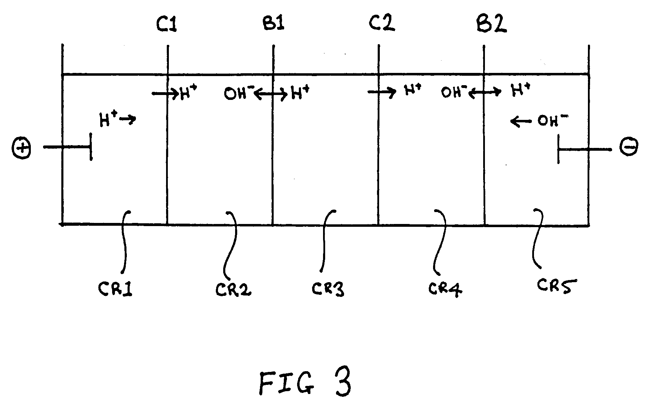

Fig. 3 shows the cell used for determining the current efficiency of a bipolar membrane. B1 and B2 are bipolar films, C1 and C2 are Nafion® cation exchange films. Chamber CR1 contained 1M H₂SO₄, chambers CR2 and CR4 an NaOH solution and chambers CR3 and CR5 an HCl solution. The acid and alkali solutions were of equal molarity, usually 2 molar.

During current flow, protons flow into chamber CR5 from the water splitting bipolar membrane B2 while hydroxyl ions are generated in the chamber at the cathode. If the water splitting current efficiency of the bipolar membrane were 100%, then the pH of the chamber would be essentially constant.

In the case of the alkali containing chamber CR4, hydroxyl ions flow into the compartment from the bipolar membrane and protons, which originate in the acid chamber CR3, from the cation exchange membrane. The only other ion which can carry current across C2 are hydroxyl ions from chamber CR4, sodium ions in chamber CR4 and chloride ions in chamber CR3 being precluded from doing so by the direction of the electric field. Thus if the transport number of protons across C2 is less than unity, the difference is due to a flow of hydroxyl ions in the opposite direction. It follows that if the water splitting current efficiency of the bipolar membrane is 100% then the pH of chamber CR4 should be essentially constant during current flow.

Similar arguments can be adduced to show that if the water splitting current efficiency of the bipolar membrane B1 is 100%, then the pH's of chambers CR2 and CR3 should be essentially constant during current flow. The water splitting current efficiency of B1 (and B2), i.e. the fraction of the total current carried by H⁺ or OH⁻ ions in the film, was estimated from the pH changes which occurred in chambers CR2 and CR3 (CR4 and CR5) during current flow, taking account of volume flow of water through the membrane.

### MODES FOR CARRYING OUT THE INVENTION

### EXAMPLE 1

Negev Institute quaternary ammonium anion and sulfonic acid cation exchange membranes were immersed for five minutes in a 7% (W/V) solution of chromium chloride in 2N sodium hydroxide at 70°C. The membranes were then washed and pressed together under heat to form a bipolar membrane. The potential difference across the bipolar membrane was 1.0 volts when it separated 1M KC1 solutions and the current was 100mA cm². The current efficiency for acid base production by the film exceeded 80%. By comparison the potential difference across a bipolar membrane formed from untreated Negev Institute anion and cation exchange membranes at the same current and electrolyte concentrations was 3.0 volts.

### EXAMPLE 2

Negev Institute quaternary ammonium anion and sulfonic acid cation exchange membranes were immersed for five minutes in a 5% (W/V) solution of ceric sulphate in 1N sodium hydroxide at 70°C. The membranes were then washed and pressed together to form a bipolar membrane. The potential difference across the bipolar membrane was 1.0 volts when it separated 1M KC1 solutions and the current was 100mA cm⁻². The current efficiency for acid base production by the film exceeded 80%. By comparison the potential difference across a bipolar membrane formed from untreated Negev Institute anion and cation exchange membranes at the same current and electrolyte concentrations was 3.0 volts.

### EXAMPLE 3

Negev Institute quaternary ammonium anion and sulfonic acid cation exchange membranes were immersed for five minutes in a 7% (W/V) solution of stannous chloride in 2N sodium hydroxide at 70°C. The membranes were then washed and pressed together to form a bipolar membrane. The potential difference across the bipolar membrane was 1.1 volts when it separated 1M KC1 solutions and the current was 100 mA cm⁻². The current efficiency for acid base production by the film exceeded 80%. By comparison the potential difference across a bipolar membrane formed from untreated Negev Institute anion and cation exchange membranes at the same current and electrolyte concentrations was 3.0 volts.

### EXAMPLE 4

Raipore 1035 and 1010 anion and cation exchange membranes were immersed for 20 minutes in a 5% (W/V) solution of ruthenium chloride in 1N NaOH at 70°C. The membranes were then washed and pressed together to form a bipolar membrane. The potential difference across the bipolar membrane was 0.9 volts for several weeks, which was the duration of the experiment, when it separated 2N HC1 and 2N NaOH solutions and the current was 100 mA cm⁻². The current efficiency for acid base production by the film exceeded 85%. By comparison the potential difference across a bipolar membrane formed from untreated Raipore anion and cation exchange membranes at the same current and electrolyte concentrations was 2.5 volts.

### EXAMPLE 5

Negev Institute quaternary ammonium anion and sulfonic acid cation exchange membranes were immersed for five minutes in a 5% solution of zirconium chloride in 2N sodium hydroxide at 70°C. The membranes were then washed and pressed together to form a bipolar membrane. The potential difference across the bipolar membrane was 1.0 volts when it separated 1M KC1 solutions and the current was 100 mA cm⁻². The current efficiency for acid base production by the film exceeded 80%. By comparison the potential difference across a bipolar membrane formed from untreated Negev Institute anion and cation exchange membranes at the same current and electrolyte concentrations was 3.0 volts

### EXAMPLE 6

Negev Institute quaternary ammonium anion and sulfonic acid cation exchange membranes were immersed for fifteen minutes in a 7% solution of nickel chloride in 2N sodium hydroxide at 60°. The membranes were then washed and pressed together to form a bipolar membrane. The potential difference across the bipolar membrane was 1.1 volts when it separated 1M KC1 solutions and the current was 100mA cm⁻². The current efficiency for acid base production by the film exceeded 85%. By comparison the potential difference across a bipolar membrane formed from untreated Negev Institute anion and cation exchange membranes at the same current and electrolyte concentrations was 3.0 volts.

### EXAMPLE 7

A Negev Institute quaternary ammonium anion exchange membrane was immersed for ten minutes in a 5% (W/V) solution of chromium chloride in 2N NaOH at 70°C. The membrane was then washed and pressed against an Asahi Chemicals K101 cation exchange membrane to form a bipolar membrane. The potential difference across the bipolar membrane was 1.4 volts when it separated 1M KC1 solutions and the current was 100 mA cm⁻². The current efficiency for acid base production by the film exceeded 80%. By comparison the potential difference across the bipolar membrane formed from untreated Negev Institute anion and Asachi Chemicals cation exchange membranes at the same current and electrolyte concentrations was 6 volts.

### EXAMPLE 8

Raipore R-1010 and R-1035 cation and anion exchange membranes were immersed for 20 minutes in a 7% (W/V) solution of chromic chloride in 2N NaOH at 100°C. The membranes were then washed clean and pressed together to form a bipolar film. The potential difference across the bipolar film was 0.9V when it separated 2N HC1 and 2N NaOH solutions and the current was 100 mA cm⁻². The current efficiency for acid base product ion in the bipolar film exceeded 85%. The properties of the film appeared constant for the duration of the experiment which was four months. By comparison the potential difference across the bipolar film formed from untreated R-1010 and R01035 membranes exceeded 2.5V.

### EXAMPLE 9

Negev Institute quaternary ammonium group anion and sulfonic acid group cation exchange membranes were immersed for five minutes in a 7% (W/V) solution of chromic chloride in 2N NaOH at 100°C. The membranes were then washed clean and pressed together to form a bipolar film. The potential difference across the bipolar film was 1.1V when it separated 2N HC1 and 2N NaOH solutions and the current was 100 mA cm-². The current efficiency for acid base production in the bipolar film was 68%. The properties of the film appeared constant for the duration of the experiment which was three weeks. By comparison the potential difference across the bipolar film formed from untreated monopolar membranes for the same current and electrolyte concentrations was 4.5V.

### EXAMPLE 10

Raipore R-1010 and R-4030 cation and anion exchange 1 m1 and 2ml thick membranes were immersed in a 1 molar chromium chloride solution, at room temperature, for one hour. The membranes were then washed with distilled water and entered wet into a polyethylene bag. The bag was then sealed.

Eight weeks later the membranes were removed from the bag, pressed together to form a bipolar film and then introduced into a multichamber electrodialysis cell. A solution of 2N NaOH at 75°C was then introduced into the chambers adjacent to the membrane for fifteen minutes. The hot 2N NaOH solution was then discarded and replaced by a 2N NaOH solution on the anolyte side of the film and a 2N HC1 solution on the catholyte side of the film, at room temperature. The potential difference across the bipolar film was 1.1V when the current was 100mA cm⁻². The current efficiency for water splitting in the film exceeded 85%. The properties of the film appeared constant for the duration of the experiment which lasted for four weeks. By comparison the potential difference across the bipolar film formed from untreated R-1010 and R-4030 membranes under the same efficiency operating conditions exceeded 2.5V.

### EXAMPLE 11

Raipore R-1010 and R-1030 cation and anion exchange 1ml thick membranes were immersed in a 10% (W/V) solution of ruthenium (III) chloride at room temperature overnight. The membranes were then washed clean, pressed together to form a bipolar film and then introduced into a multichamber electrodialysis cell. A solution of 0.5N NaOH at 75°C was then introduced into the chambers adjacent to the membrane for thirty minutes. The 0.5N NaOH solution was then discarded and replaced by a 2N NaOH solution on the anolyte side of the film and a 2N HC1 solution on the catholyte side of the film at room temperature. The potential difference across the bipolar film was 1.0V when the current was 100 MA cm⁻². The current efficiency for water splitting in the film exceed 85%. The properties of the film appeared constant for the duration of the experiment which lasted for 100 hours. By comparison the potential difference across the bipolar film formed from untreated R-1010 and R-1030 membranes under the same operating conditions exceeded 2.5V.

### EXAMPLE 12

Negev Institute quaternary ammonium anion and sulfonic acid cation exchange membrances were immersed for thirty minutes in a 1 molar solution of chromium chloride. The membranes were then washed, pressed together to form a bipolar membrane, and then introduced into a multichamber electrodialysis cell. A solution of 2N NaOH at 75°C was then introduced into the chambers adjacent to the membrane for thirty minutes. The NaOH was then discarded and replaced by 1M KC1 solutions, at room temperature. The potential difference across the bipolar membrane was 1.4 volts when it separated 1M KC1 solutions and the current was 50mA cm⁻². The current efficiency for acid base production by the film exceeded 80%. By comparison the potential difference across a bipolar membrane formed from untreated Negev Institute anion and cation exchange membranes at the same current and electrolyte concentrations was 2.2 volts.

### EXAMPLE 13

Raipore R-1010 and R-1030 cation and anion exchange 1 ml thick membranes were immersed in a 10% (w/V) solution of ferrous chloride at room temperature for one hour. The membranes were then washed with distilled water, pressed together to form a bipolar membrane, and introduced into a multichamber electrodialysis cell. A solution of 2N NaOH at 70°C was introduced into the chambers adjacent to the membrane for thirty minutes. The 2N NaOH solution was then discarded and replaced by a 2N NaOH solution on the anolyte side of the film and a 2N HC1 solution on the catholyte side of the film, at room temperature. The potential difference across the bipolar film was 1.1V when the current was 100 mA cm⁻². The current efficiency for water splitting in the film exceeded 85%. The properties of the film appeared constant for the duration of the experiment which lasted for 4 hours. By comparison the potential difference across the bipolar film formed from untreated R-1010 and R-1030 membranes under the same operating conditions exceeded 2.5V.

### EXAMPLE 14

Raipore R-1010 and R-1030 cation and anion exchange 1 ml thick membranes were immersed in a 10% (w/V) solution of stannous chloride for 1 hour. The membranes were then washed with distilled water, pressed together to form a bipolar membrane and introduced into a multichamber electrodialysis cell. A solution of 2N NaOH at 75°C was then introduced into the chambers adjacent to the membrane for fifteen minutes. The 2N NaOH solution was then discarded and replaced by 1M KC1 solution, at room temperature. The potential difference across the bipolar film was 1.1V when the current was 100mA cm⁻². The current efficiency for water splitting in the film exceeded 85%. By comparison the potential difference across the bipolar film formed from untreated R-1010 and R-1030 membranes under the same operating conditions exceeded at 2.5V.

### EXAMPLE 15

Asahi Chemicals K101 and Raipore R-1030 cation and anion exchange membranes were immersed in a 1 molar solution of chromium chloride for 1 hour. The membranes were then washed with distilled water, pressed together to form a bipolar membrane and then introduced into a multichamber electrodialysis cell A solution of 2N NaOH at 75°C was then introduced into the chambers adjacent to the membrane for twenty minutes. The 2N NaOH solution was discarded and replaced by 1M KC1, at room temperature. The potential difference across the bipolar film was 1.8V when the current was 50 mA cm⁻². The current efficiency for water splitting in the film exceeded 85%. By comparison the potential difference across the bipolar film formed from untreated K101 and R-1030 membranes under the same operating conditions exceeded 8V.

## Claims

1. A bipolar membrane comprising conjoined, modified anion and cation exchange membranes, said modified membranes comprising anion and cation exchange membranes modified by
(a) treatment with an aqueous salt solution in a concentration of at least 5% w/v, the salt solution providing at least one divalent or higher oxidation state cation, prior to being conjoined, and
(b) treatment of at least one face of one of the anion and cation exchange membranes with an aqueous alkaline solution in a concentration of at least 0.2N,
characterised in that said aqueous alkaline solution or the solution resulting from the combination of said aqueous salt solution with said aqueous alkaline solution is at a temperature of at least 60 °C.

2. A bipolar membrane as in claim 1, wherein the membranes are treated, prior to conjoining, by immersion in an aqueous salt solution providing at least one divalent or higher oxidation state cation.

3. A bipolar membrane as in claim 2, wherein the membranes are conjoined prior to treatment with the aqueous alkaline solution.

4. A bipolar membrane as in claim 2, wherein the membranes are treated with the aqueous alkaline solution prior to conjoining.

5. A bipolar membrane as in claim 4, wherein the aqueous alkaline solution includes the at least one divalent or higher oxidation state cation.

6. A bipolar membrane as in claim 5, wherein both membranes are treated by immersion in the aqueous alkaline solution.

7. A bipolar membrane as in claim 6, characterized in that the aqueous alkaline solution is at a temperature between about 70°C and about 100°C.

8. A bipolar membrane as in claim 4, characterized in that prior to conjoining, both membranes are treated by immersion in an aqueous salt solution providing at least one divalent or higher oxidation state cation, and then treated by immersion in the aqueous alkaline solution.

9. A bipolar membrane as in claim 3, wherein treatment with the aqueous alkaline solution consists of contacting a membrane face with said solution.

10. A bipolar membrane as in claim 9, wherein both of the membrane faces are contacted with the aqueous alkaline solution.

11. A bipolar membrane as in claim 10, wherein the aqueous alkaline solution is at a temperature of about 75°C.

12. A bipolar membrane as in claim 2, wherein said salt solution providing at least one cation is in a concentration of from 5 to 15% w/v.

13. A bipolar membrane as in claim 12, wherein the at least one cation is selected from the group consisting of Cr³⁺, Ru³⁺, Ce³⁺, Ni²⁺, Zr⁴⁺, In³⁺, Sn²⁺ and Fe²⁺.

14. A bipolar membrane as in claim 13, wherein the salt is selected from the group consisting of chromic nitrate, chromic chloride, ruthenium trichloride, indium sulphate, cerous sulphate, thorium nitrate and zirconium chloride.

15. A bipolar membrane as in claim 2, wherein the alkali concentration is from 0.2N to 2.0N.

16. A bipolar membrane as in claim 2, wherein the anion and cation exchange membranes include quaternary ammonium and sulphonic acid groups.

17. A method for the preparation of a bipolar membrane from modified anion and cation exchange membranes comprising modifying anion and cation exchange membranes by either
(a) treating an anion exchange membrane and a cation exchange membrane with an aqueous solution of a salt in a concentration of at least 5% w/v, said salt yielding in the solution at least one divalent or higher oxidation state cation;
(b) conjoining the treated anion and cation exchange membranes ; and
(c) treating at least one face of the conjoined membranes with an aqueous alkaline solution in a concentration of at least 0.2N, to give said bipolar membrane, or
(d) treating an anion exchange membrane and a cation exchange membrane with an aqueous alkaline solution of a salt, wherein said aqueous alkaline solution is in a concentration of at least 0.2N and said salt is in a concentration of at least 5% w/v, said salt yielding in the solution at least one divalent or higher oxidation state cation, and then conjoining the modified membranes to give said bipolar membrane,
characterised in that said aqueous alkaline solution or said aqueous alkaline solution of a salt is at a temperature of at least 60 °C.

18. A method as in claim 17, wherein the treatment comprises immersion of the anion exchange membrane in the aqueous salt solution.

19. A method as in claim 17, wherein the treatment (c) with the aqueous alkaline solution consists of contacting one face of the bipolar membrane with said solution.

20. A method as in claim 19, wherein both faces of the bipolar membrane are contacted with the aqueous alkaline solution.

21. A method as in claim 17, wherein the alkali is in a concentration of 0.2N to 2.0N.

22. A method as in claim 21, wherein the alkaline solution in treatment (c) contacts the membrane for from 15 to 30 minutes.

23. A method as in claim 22, wherein the alkaline solution is at a temperature of about 75°C.

24. A method as in claim 17, wherein the anion and cation exchange membranes in treatment (a) are immersed in the aqueous salt solution.

25. A method as in claim 17, wherein the salt is in a concentration of from 5 to 15% w/v.

26. A method as in claim 25, wherein the salt is selected from the group consisting of chromic nitrate, chromic chloride, ruthenium trichloride, ferrous chloride, indium suphate, cerous sulphate, thorium nitrate and zirconium chloride.

27. A method as in claim 17, wherein the membranes are conjoined by pressing together at a temperature below the onset of deformation or degradation of the membranes.

28. A method as in claim 17, wherein the membranes in treatment (d) are immersed in the aqueous alkaline salt solution.

29. A method as in claim 28, wherein the aqueous alkaline salt solution is at a temperature of between about 70°C and about 100°C.

30. A method as in claim 17, wherein the membranes are washed prior to joining.

31. Use of a bipolar membrane as claimed in any one of claims 1 to 16 for the production of acid and alkali by electrodialysing an aqueous salt solution.

## Patentansprüche

1. Zweipolige Membrane aus zusammenfuegten abgeanderten Anionen- und Kationen-Austausch-Membranen, wobei die vorgenannten abgeaenderten Membranen Anionen- und Kationen-Austausch-Membranen enthalten, die folgendermassen abgeaendert werden
a) Behandlung mit einer waessrigen Salzloesung in einer Konzentration von mindestens 5 Gew.%, wobei diese Salzloesung ein zweiwertiges oder hoeher-wertiges oxidiertes Kation liefert, bevor sie zusammengefuegt werden;
b) Behandlung mindestens einer Flaeche der Anionen- oder Kationen-Austausch-Membranen mit einer waessrigen Laugeloesung von mindestens 0,2 N,
dadurch gekennzeichnet, dass die vorgenannte waessrige Laugeloesung oder die Kombination der vorgenannten waessrigen Salzloesung mit der vorgenannten waessrigen Laugeloesung eine Temperatur von mindestens 60°C aufweist.

2. Zweipolige Membrane nach Anspruch 1, worin die Membranen, bevor sie zusammengefuegt werden, in eine zumindest ein zweiwertiges oder hoeher-wertiges oxidiertes Kation liefernende waessrige Salzloesung eingetaucht werden.

3. Zweipolige Membrane nach Anspruch 2, worin die Membranen vor deren Behandlung mit der waessrigen Salzloesung zusammengefuegt werden.

4. Zweipolige Membrane nach Anspruch 2, worin die Membranen, bevor sie zusammengefuegt werden, mit der waessrigen Laugeloesung behandelt werden.

5. Zweipolige Membrane nach Anspruch 4, worin die waessrige Laugeloesung mindestens ein zweiwertiges oder hoeher-wertiges oxidiertes Kation enthaelt.

6. Zweipolige Membrane nach Anspruch 5, worin die beiden Membranen durch Eintauchen in die waessrige Laugeloesung behandelt werden.

7. Zweipolige Membrane nach Anspruch 6, dadurch gekennzeichnet, dass die waessrige Laugeloesung eine Temperatur zwischen etwa 70°C und etwa 100°C aufweist.

8. Zweipolige Membrane nach Anspruch 4, dadurch gekennzeichnet, dass die beiden Membranen, bevor sie zusammengefuegt werden, in eine mindestens ein zweiwertiges oder hoeher-wertiges oxidiertes Kation liefernende waessrige Salzloesung eingetaucht werden, und dann in die waessrige Laugeloesung behandelt werden.

9. Zweipolige Membrane nach Anspruch 3, worin die Behandlung mit der waessrigen Laugeloesung darin besteht, dass eine Membraneflaeche mit der vorgenannten Loesung in Beruehrung gebracht wird.

10. Zweipolige Membrane nach Anspruch 9, worin die beiden Membraneflaechen mit der waessrigen Laugeloesung in Beruehrung gebracht werden.

11. Zweipolige Membrane nach Anspruch 10, worin die waessrige Laugeloesung eine Temperatur von etwa 75°C hat.

12. Zweipolige Membrane nach Anspruch 2, worin die vorgenannte, mindestens ein Kation liefernende Salzloesung eine Konzentration von 5 bis 15 Gew.% aufweist.

13. Zweipolige Membrane nach Anspruch 12, worin das mindestens ein Kation von der aus Cr³⁺, Ru³⁺, Ce³⁺, Ni²⁺, Zr⁴⁺, In³⁺, Sn²⁺ und Fe²⁺ bestehenden Gruppe ausgewaehlt wird.

14. Zweipolie Membrane nach Anspruch 13, worin das Salz von der aus Chromnitrat, Chromchlorid, Rutheniumtrichlorid, Eisenchlorid, Indiumsulfat, Zeriumsulfat, Thoriumnitrat und Zirkoniumchlorid bestehenden Gruppe ausgewaehlt wird.

15. Zweipolige Membrane nach Anspruch 2, worin die Lauge eine Konzentration von 0,2 N bis 2,0 N hat.

16. Zweipolige Membrane nach Anspruch 2, worin die Anionen- und Kationen-Austausch-Membranen quaternaere Ammonium- und Sulfonsaeure-Gruppen enthalten.

17. Verfahren zur Vorbereitung einer zweipoligen Membrane aus abgeaenderten Anionen- und Kationen-Austausch-Membranen, wobei die Anionen- und Kationen-Austausch-Membranen durch folgende Verfahrensschritte abgeaendert werden:
a) Behandlung einer Anionen-Austausch-Membrane und einer Kationen-Austausch-Membrane mit einer waessrigen Loesung eines Salzes in einer Konzentration von mindestens 5 Gew.%, wobei dieses Salz in der Loesung mindestens ein zweiwertiges oder hoeher-wertiges oxidiertes Kation liefert;
b) Zusammenfuegen der so behandelten Anionen- und Kationen-Austausch-Membranen, und
c) Behandlung mindestens einer Flaeche der zusammengefuegten Membranen mit einer waessrigen Laugeloesung in einer Konzentration von mindestens 0,2 N zur Erhaltung der vorgenannten n Membrane, oder
d) Behandlung einer Anionen-Austausch-Membrane und einer Kationen-Austausch-Membrane mit einer waessrigen Laugeloesung eines Salzes, wobei diese waessrige Laugeloesung eine Konzentration von mindestens 0,2 N und dieses Salz eine Konzentration von mindestens 5 Gew. % hat und wobei das vorgenannte Salz in der Loesung mindestens ein zweiwertiges oder hoeher-wertiges oxidiertes Kation liefert, wonach die abgeaenderten Membranen zur vorgenannten zweipoligen Membrane zusammengefuegt werden,
dadurch gekennzeichnet, dass die vorgenannte waessrige Laugeloesung oder die vorgenannte waessrige Laugeloesung eines Salzes eine Temperatur von mindestens 60°C aufweist.

18. Verfahren nach Anspruch 17, worin die Behandlung das Eintauchen der Anionen-Austausch-Membrane in die waessrige Salzloesung ethaelt.

19. Verfahren nach Anspruch 17, worin die Behandlung (c) mit der waessrige Laugeloesung dadurch durchgefuehrt wird, dass eine Flaeche der zweipoligen Membrane mit der vorgenannte Loesung in Beruehrung gebracht wird.

20. Verfahren nach Anspruch 19, worin die beiden Flaechen der zweipoligen Membrane mit der waessrigen Laugeloesung in Beruehrung gebracht werden.

21. Verfahren nach Anspruch 17, worin die Lauge in einer Konzentration von 0,2 N bis 2,0 N vorliegt.

22. Verfahren nach Anspruch 21, worin in der Behandlung (c) die Membrane 15 bis 30 Minuten mit der Laugeloesung in Beruehrung bleibt.

23. Verfahren nach Anspruch 22, worin die Laugeloesung eine Temperatur von etwa 75°C hat.

24. Verfahren nach Anspruch 17, worin die Anionen- und Kationen-Austausch-Membranen sind in der Behandlung (a) in der waessrigen Salzloesung eingetaucht.

25. Verfahren nach Anspruch 17, worin in das Salz eine Konzentration von 5 bis 15 Gew. % hat.

26. Verfahren nach Anspruch 25, worin in das Salz von der aus Chromnitrat, Chromchlorid, Rutheniumtrichlorid, Eisenchlorid, Indiumsulfat, Zeriumsulfat, Thoriumnitrat und Zirkoniumchlorid bestehenden Gruppe ausgewaehlt wird.

27. Verfahren nach Anspruch 17, worin in die Membranen bei einer Temperatur unterhalb der Verformungs- oder Abbautemperatur durch Zusammenpressen vereingt werden.

28. Verfahren nach Anspruch 17, worin in die Membranen bei der Behandlung (d) in die waessrige Laugeloesung von Salz eingetaucht werden.

29. Verfahren nach Anspruch 28, worin in die waessrige Laugeloesung von Salz eine Temperatur zwischen etwa 70°C und etwa 100°C hat.

30. Verfahren nach Anspruch 17, worin die Membranen vor der Zusammenfuegung gewaschen werden.

31. Anwendung einer zweipoligen Membrane nach je einem Anspruch 1 bis 16 zur Herstellung von Saeuren oder Laugen durch eine Elektrodialyse einer waessrigen Salzloesung.

## Revendications

1. Membrane bipolaire comprenant, jointes, des membranes d'échange d'anions et de cations, lesdites membranes étant modifiées par:
(a) traitement avec une solution saline aqueuse à une concentration de au moins le 5% en poids, la solution saine fournissant au moins un cation bivalent ou à un état d'oxydation supérieur, avant de leur jonction et
(b) traitement d'au moins une face d'une des membranes d'échange d'anions et de cations par une solution alcaline aqueuse à une concentration au moins de 0,2N,
caractérisée en ce que ladite solution alcaline aqueuse ou la solution resultante de la combination de ladite solution saline aqueuse avec ladite solution alcaline aqueuse est à une température de au moins 60°C.

2. Membrane bipolaire selon la revendication 1, dans laquelle les membranes sont traitées, avant de leur jonction, par l'immersion dans une solution saine aqueuse fournissant au moins un cation bivalent ou à un état d'oxydation supérieur.

3. Membrane bipolaire selon la revendication 2, dans laquelle les membranes sont jointes avant le traitement par la solution alcaline aqueuse.

4. Membrane bipolaire selon la revendication 2, dans laquelle les membranes sont traitées par la solution alcaline aqueuse avant leur jonction.

5. Membrane bipolaire selon la revendication 4, dans laquelle la solution alcaline aqueuse comprend le au moins un cation bivalent ou à un état d'oxydation supérieur.

6. Membrane bipolaire selon la revendication 5, dans laquelle les deux membranes sont traitées par immersion dans la solution alcaline aqueuse.

7. Membrane bipolaire selon la revendication 6, caractérisée en ce que la solution alcaline aqueuse est à une température entre environ 70°C et environ 100°C.

8. Membrane bipolaire selon la revendication 4, caractérisée en ce que avant leur jonction les deux membranes sont traitées par l'immersion dans une solution saline aqueuse fournissant au moins un cation bivalent ou à un état d'oxydation supérieur.

9. Membrane bipolaire selon la revendication 3, dans laquelle le traitement par la solution alcaline aqueuse consiste en mettre à contact une face de la membrane avec ladite solution.

10. Membrane bipolaire selon la revendication 9, dans laquelle les deux faces de la membrane sont contactées avec la solution alcaline aqueuse.

11. Membrane bipolaire selon la revendication 10, dans laquelle la solution alcaline aqueuse est à une température d'environ 75°C.

12. Membrane bipolaire selon la revendication 2, dans laquelle ladite solution aqueuse fournissant au moins un cation est à une concentration entre 5 et 15% en poids.

13. Membrane bipolaire selon la revendication 12, dans laquelle ledit au moin un cation est coisi du groupe consistant de Cr³⁺, Ru³⁺, Ce³⁺, Ni²⁺, Zr⁴⁺, In³⁺ Sn²⁺ et Fe²⁺.

14. Membrane bipolaire selon la revendication 13, dans laquelle le sel est choisi du groupe consistant de nitrate chromique, chlorure chromique, trichlorure de ruthénium, sulfate d'indium, sulfate de cérium, nitrate de thorium et chlorure de zirconium.

15. Membrane bipolaire selon la revendication 2, dans laquelle la concentration d'alcali est entre 0,2N et 2,0N.

16. Membrane bipolaire selon la revendication 2, dans laquelle les membranes d'échange d'anions et de cations contienment des groupes d'ammonium quaternaire et d'acide sulfoné.

17. Procédé pour la préparation d'une membrane bipolaire à partir de membranes d'échange d'anions et de cations modifiées, comprenant la modification des membranes d'échange d'anions et cations par:
(a) traitement d'une membrane d'échange d'anions et d'une membrane d'échange de cations par une solution saline aqueuse en concentration de au moins le 5% en poids, ledit sel fournissant dans la solution au moins un cation bivalent ou à un état d'oxydation supérieur;
(b) jonction des membranes d'échange d'anions et de cations;
(c) traitement d'au moins une face des membranes jointes par une solution alcaline aqueuse à une concentration au moins de 0,2N pour obtenir ladite membrane bipolaire, ou
(d) traitement d'une membrane d'échange d'anions et d'une membrane d'échange de cations par une solution alcaline aqueuse d'un sel, dans lequelle ladite solution alcaline aqueuse est à une concentration au moins de 0,2N et ledit sel est à une concentration au moins de 5% en poids, ledit sel fournissant dans la solution au moins un cation bivalent ou à un état d'oxydation supérieur et jonction successife des membranes modifiées pour obtenir ladite membrane bipolaire;
caractérisé en ce que ladite solution alcaline aqueuse ou ladite solution alcaline aqueuse d'un sel est à une température de au moins 60°C.

18. Procédé selon la revendication 17, dans lequel le traitement comprend l'immersion de la membrane d'échange d'anions dans la solution saine aqueuse.

19. Procédé selon la revendication 17, dans lequel le traitement (c) avec la solution alcaline aqueuse consiste en mettre à contact une face de la membrane bipolaire avec ladite solution.

20. Procédé selon la revendication 19, dans lequel les deux faces de la membrane bipolaire sont contactées avec la solution alcaline aqueuse.

21. Procédé selon la revendication 17, dans lequel l'alcali est à une concentration de 0,2N à 2,0N.

22. Procédé selon la revendication 21, dans lequel la solution alcaline dans le traitement (c) est contactée avec la membrane pour une période de temps entre 15 et 30 minutes.

23. Procédé selon la revendication 22, dans lequel la solution alcaline a une température d'environ 75°C.

24. Procédé selon la revendication 17, dans lequel les membranes d'échange d'anions et de cations dans le traitement (a) sont immergées dans la solution saline aqueuse.

25. Procédé selon la revendication 17, dans lequel le sel est à une concentration entre 5 et 15% en poids.

26. Procédé selon la revendication 25, dans lequel le sel est choisi du groupe consistant de nitrate chromique, chlorure chromique, trichlorure de ruthénium, sulfate d'indium, sulfate de cérium, nitrate de thorium et chlorure de zirconium.

27. Procédé selon la revendication 17, dans lequel les membranes sont jointes par pressage à une température inférieure à la température de déformation ou de dégradation des membranes.

28. Procédé selon la revendication 17, dans lequel les membranes dans le traitement (d) sont immergées dans la solution alcaline aqueuse de sel.

29. Procédé selon la revendication 28, dans lequel la solution alcaline aqueuse de sel est à une température entre environ 70°C et environ 100°C.

30. Procédé selon la revendication 17, dans lequel les membranes sont lavées avant leur jonction.

31. Utilisation d'une membrane bipolaire comme revendiquée dans l'une quelconque des revendications 1 à 16 pour la production d'acide ou d'alcali par l'électrodialyse d'une solution aqueuse de sel.
